Europäisches Patentamt

European Patent Office

Office européen des brevets

(19)

(11) Veröffentlichungsnummer: **0 403 615 B1**

(12) **EUROPÄISCHE PATENTSCHRIFT**

(45) Veröffentlichungstag der Patentschrift: **02.03.94**

(51) Int. Cl.⁵: **F02D 41/14**

(21) Anmeldenummer: **89912984.5**

(22) Anmeldetag: **21.11.89**

(86) Internationale Anmeldenummer:
**PCT/DE89/00727**

(87) Internationale Veröffentlichungsnummer:
**WO 90/06431 (14.06.90 90/14)**

(54) **VERFAHREN UND VORRICHTUNG ZUM ERKENNEN EINES FEHLERZUSTANDES EINER LAMBDASONDE.**

(30) Priorität: **29.11.88 DE 3840148**

(43) Veröffentlichungstag der Anmeldung:
**27.12.90 Patentblatt 90/52**

(45) Bekanntmachung des Hinweises auf die Patenterteilung:
**02.03.94 Patentblatt 94/09**

(84) Benannte Vertragsstaaten:
**DE FR GB IT**

(56) Entgegenhaltungen:
US-A- 4 178 793
US-A- 4 528 957

PATENT ABSTRACTS OF JAPAN, vol. 9, no. 133 (P-362) 08 Juni 1985, & JP-A-60 017349 (NISSAN JIDOSHA K.K.) 29 Januar 1985

PATENT ABSTRACTS OF JAPAN, vol. 8, no. 43 (M-279) 24 Februar 1984, & JP-A-58 197451 (TOYOTA JIDOSHA K.K.) 17 November 1983

PATENT ABSTRACTS OF JAPAN, vol. 12, no. 29 (P-660) 28 Januar 1988, & JP-A-62 182645 (HONDA MOTOR CO LTD.) 11 August 1987

PATENT ABSTRACTS OF JAPAN, vol. 12, no. 309 (P-748) 23 August 1988, & JP-A-63 079049 (MAZDA MOTOR CORPORATION) 09 April 1988

(73) Patentinhaber: **ROBERT BOSCH GMBH**
**Postfach 30 02 20**
**D-70442 Stuttgart(DE)**

(72) Erfinder: **DENZ, Helmut**
**Friedrich-Ebert-Str. 59**
**D-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 403 615 B1

# Beschreibung

## Stand der Technik

Die Erfindung betrifft ein Verfahren und eine Vorrichtung zum Erkennen eines Fehlerzustandes einer Lambdasonde und zum Ergreifen von Maßnahmen auf ein Fehlersignal hin, das bei erkanntem Fehlerzustand abgegeben wird.

Derartige Verfahren und Vorrichtungen sind z. B. aus DE 33 19 432 A1 (entsprechend US-4 528 957) und EP 0 258 543 A2 (entsprechend US 4 742 808) bekannt. Bei beiden Verfahren wird indirekt untersucht, ob die überwachte Sonde eine ausreichend hohe Temperatur für zuverlässige Lambdawertmessungen aufweist. Ist dies nicht der Fall, gilt die Sonde als nicht betriebsbereit und der Lambdawert wird nicht geregelt, sondern gesteuert. Erst wenn die Betriebstemperatur ausreichend hoch ist und somit Betriebsbereitschaft erkannt ist, wird der Lambdawert durch Regelung eingestellt.

Beim Verfahren gemäß der genannten deutschen Schrift wird der Sondenspannung über einen bekannten Widerstand eine Gegenspannung zugeschaltet und es wird überwacht, ob die resultierende Spannung einen vorgegebenen Bereich verläßt, d. h. ob eine Schwellenspannung für Lambdawerte für fette Gemische überschritten oder eine Schwellenspannung für Lambdawerte für magere Gemische unterschritten wird. Solange die Spannung noch innerhalb des Bereiches liegt, wird auf fehlende Betriebsbereitschaft erkannt und somit der Lambdawert gesteuert. Beim Verfahren gemäß der genannten europäischen Schrift wird direkt der Innenwiderstand der Sonde gemessen, was mit Hilfe eines bekannten Lastwiderstandes und zweier Spannungsmessungen erfolgt. Sobald der gemessene Wert einen Widerstandsschwellenwert unterschreitet, gilt die Sonde als betriebsbereit.

Im praktischen Betrieb hat es sich gezeigt, daß es trotz derartiger Maßnahmen dazu kommt, daß die Sonde durch Nebenschlüsse als betriebsbereit erkannt wird, obwohl dies nicht der Fall ist. Daraus resultiert schlechtes Regelverhalten, was hohe Schadstoffemmission und schlechte Fahrqualität zur Folge hat.

Der Erfindung liegt die Aufgabe zugrunde, ein zuverlässiges Verfahren zum Erkennen eines solchen Fehlerzustandes einer Lambdasonde anzugeben. Der Erfindung liegt weiterhin die Aufgabe zugrunde, eine Vorrichtung zum Durchführen eines solchen Verfahrens anzugeben.

## Vorteile der Erfindung

Die Erfindung ist für das Verfahren durch die Merkmale von Anspruch 1 und für die Vorrichtung durch die Merkmale von Anspruch 10 gegeben.

Vorteilhafte Weiterbildungen und Ausgestaltungen des Verfahrens sind Gegenstand der Unteransprüche 2 bis 9.

Der Erfindung liegt die Erkenntnis zugrunde, daß ein unerwünschter Nebenschluß zwischen Sondenheizspannung und Sondenspannung bestehen kann. In diesem Fall verfälscht die Heizspannung die von der Sonde erzeugte Spannung. Die Nebenschlußspannung und damit die Verfälschung ist jedoch nicht vorhanden, wenn die Sondenheizung ausgeschaltet ist.

Besonders einfach ist es, die Nebenschlußspannung festzustellen, wenn sich der Lambdawert nicht ändert. Dies ist insbesondere vor dem Start der Brennkraftmaschine und während Schubphasen der Fall. Die Differenz zwischen den bei eingeschalteter und ausgeschalteter Heizung gemessenen Sondenspannungen ergibt direkt die Nebenschlußspannung. Überschreitet die Differenz einen vorgegebenen Schwellendifferenzwert, wird das Fehlersignal ausgegeben.

Ändert sich der Lambdawert laufend, ist es schwieriger zu ermitteln, ob ein Nebenschluß vorliegt. Insbesondere dann, wenn eine Sonde mit nichtlinearem Verhalten verwendet wird, deren Sondenspannung sich im Bereich um Lambda = Eins stark mit änderndem Lambdawert ändert. Wird zu zwei aufeinanderfolgenden Zeitpunkten einmal bei eingeschalteter und dann bei ausgeschalteter Heizung gemessen und wird eine Differenz zwischen den zwei Meßwerten festgestellt, ist nicht klar, ob diese Differenz durch eine Änderung des Lambdawertes oder durch einen Nebenschluß oder durch beides verursacht ist. Dies läßt sich jedoch feststellen, wenn das Aus- und Einschalten in pseudobinärer Folge ausgeführt wird und die Meßwerte durch ein Korrelationsverfahren ausgewertet werden. Zeigt die Auswertung, daß den bei eingeschalteter Heizung gemessenen Spannungswerten eine vom jeweiligen Lambdawert unabhängige Fremdgleichspannung unzulässiger Größe überlagert ist, wird das Fehlersignal ausgegeben.

Die Auswertung mit Hilfe eines Korrelationsverfahrens ist aufwendig, bietet jedoch den Vorteil, daß die Höhe der Nebenschlußspannung in jedem Zeitpunkt festgestellt werden kann. Dies ermöglicht es, mit der ermittelten Nebenschlußspannung die gemessene Sondenspannung zu kompensieren. Dadurch wird ein korrekter Sondenspannungswert erhalten, auf Grundlage dessen geregelt werden kann.

Wird ein einfaches Verfahren ausgeführt, mit dem die Höhe der Nebenschlußspannung in Zeiträumen, in denen sich der Lambdawert ändert, nicht ermittelt werden kann, ist es von Vorteil, den Lambdawert zu steuern, solange das Fehlersignal vorliegt. Es besteht dann aber der Wunsch, so bald wie möglich die Wirkung des Fehlersignales aufzuheben. Am einfachsten erfolgt dies dadurch, daß mit Ablauf einer vorgegebenen Zeitspanne nach dem Erkennen des Fehlerzustandes die Wirkung des Fehlersignales aufgehoben wird. Eine andere Möglichkeit besteht darin, abzuwarten, bis Schubbetrieb erreicht wird. Dann wird das Verfahren zum Erkennen des Nebenschlusses erneut durchgeführt. Wird festgestellt, daß kein Fehlerzustand mehr vorliegt, wird die Wirkung des zuvor abgegebenen Fehlersignales aufgehoben. Das soeben genannte Verfahren erlaubt es, sehr genau zu ermitteln, ob noch ein Fehlerzustand vorliegt. Es kann jedoch relativ lange Zeit vergehen, bis die Überprüfung möglich wird, nämlich dann, wenn für längere Zeit kein Schubbetrieb eintritt. Zum Aufheben der Wirkung des Fehlersignales sind daher Verfahren von besonderem Vorteil, die überprüfen, ob die Sondenspannung einen vorgegebenen Schwellenwert erreicht. Ist dies der Fall, wird das Fehlersignal aufgehoben.

Die erfindungsgemäße Vorrichtung weist ein Mittel auf zum Feststellen, ob bei jeweils gleichem Lambdawert die Sondenspannung bei eingeschalteter Heizung größer ist als bei ausgeschalteter, und zum Ausgeben des Fehlersignales, falls dies der Fall ist.

Zeichnung

Die Erfindung wird im folgenden anhand von durch Figuren veranschaulichten Ausführungsbeispielen näher erläutert. Es zeigen:

Fig. 1 ein Schaltbild für eine beheizbare Sonde mit Nebenschluß sowie eine Auswerteschaltung für die Sondenspannung;

Fig. 2 ein Diagramm zum Erläutern verschiedener Spannungen, die für die Funktion einer Lambdasonde von Bedeutung sind;

Fig. 3 ein Flußdiagramm zum Erläutern eines bei konstantem Lambdawert ausführbaren Verfahrens zum Schalten auf Steuerung im Falle des Vorliegens eines Nebenschlusses und zum Umschalten auf übliche Betriebsbereitschaftsüberprüfung nach Eintritt einer vorgegebenen Bedingung;

Fig. 4 - 7 Flußdiagramme betreffend fünf Ausführungsformen zu dem in Fig. 3 genannten Bedingungsschritt;

Fig. 7* Diagramme verschiedener Spannungen zur Erläuterung des Verfahrens nach Fig. 7 und

Fig. 8 ein Flußdiagramm zum Erläutern eines bei variablem Lambdawert ausführbaren Verfahrens zum Schalten auf Steuerung im Falle des Vorliegens eines Nebenschlusses.

Beschreibung von Ausführungsbeispielen

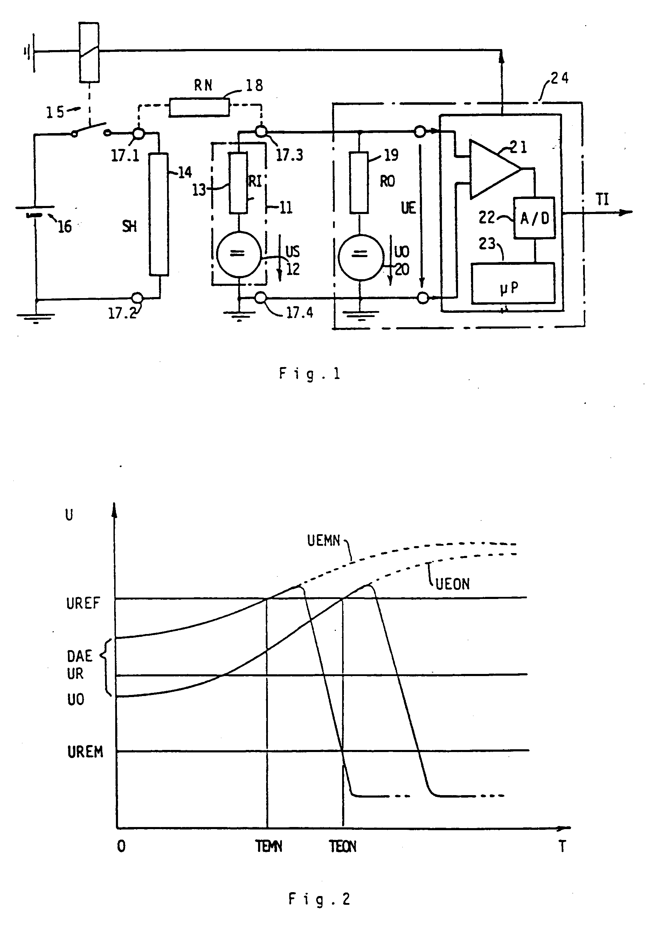

Im Schaltbild gemäß Fig. 1 ist eine Lambdasonde 11 durch ein strichpunktiertes Kästchen angedeutet, in dem die Ersatzschaltung der Sonde dargestellt ist, nämlich eine Sondenspannungsquelle 12, die die Sondenspannung US abgibt, und ein Innenwiderstand 13 vom Wert RI. Die Lambdasonde 11 wird von einer Sondenheizung 14 beheizt, die zu diesem Zweck über einen Schalter 15 mit einer Batterie 16 verbindbar ist. Die Lambdasonde 11 und die Sondenheizung SH 14 befinden sich in einem gemeinsamen Gehäuse mit vier Anschlüssen 17.1 - 17.4. Es sei ein Fehlerfall angenommen, bei dem zwischen den nicht mit Masse verbundenen Anschlüssen 17.1 und 17.3 von Heizung 14 bzw. Sonde 11 ein Nebenschluß besteht, was durch einen gestrichelt gezeichneten Nebenschlußwiderstand RN 18 dargestellt ist.

Die von der Sonde 11 gelieferte Spannung US wird, einschließlich der Nebenschlußspannung, nicht unmittelbar abgegriffen, sondern das Abgreifen erfolgt an einem Lastwiderstand 19 vom Widerstandswert RO, der über eine Gegenspannungsquelle 20 der Spannung UO mit Masse verbunden ist. Die abgegriffene Spannung ist mit UE bezeichnet. Sie wird über einen Differenzverstärker 21 und einen A/D-Wandler 22 an einen Mikroprozessor 23 in einem Steuergerät 24 geliefert, wo sie in einen digitalen Wert verarbeitet wird und in einem Regelungsverfahren ausgewertet wird, um schließlich zu einem Maß für die zuzumessende Kraftstoffmenge zu führen, z. B. zu einer Einspritzzeit TI. Der Schalter 15 zum Ein- und Ausschalten der Sondenheizung 14 wird ebenfalls vom Mikroprozessor 23 betrieben. Der Schalter ist ein gesondert steuerbares Sondenheizrelais oder ein Relais zum Steuern der Kraftstoffpumpe, an das die Sondenheizung mit angeschlossen ist. Statt Relais können auch elektronische Schaltglieder verwendet werden. In Fig. 2 ist der zeitliche Verlauf der genannten Eingangsspannung UE in den Mikroprozessor 23 zusammen mit einigen weiteren Spannungen dargestellt. Zunächst ist anzumerken, daß für die Eingangsspannung zwei unterschiedliche Kurven aufgezeichnet sind, nämlich für eine Eingangsspannung UEON chne Nebenschluß und für eine Eingangsspannung UEMN mit Nebenschluß.

Es sei zunächst der Verlauf der Spannung UEON ohne Nebenschluß betrachtet. Wenn die Lambdasonde 11 noch kalt ist, ist der Innenwiderstandswert RI sehr viel höher als der Lastwiderstandswert RO. Der Wert der Eingangsspannung UEON entspricht dann dem Gegen spannungswert UO. Hat die Sonde dagegen ihre Betriebstemperatur erreicht, ist der Innenwiderstandswert RI erheblich niedriger als der Lastwiderstandswert RO, was zur Folge hat, daß der Eingangsspannungswert UEON im wesentlichen dem Sondenspannungswert US entspricht. Der Gegenspannungswert UO ist so gewählt, daß er in etwa in der Mitte zwischen den Sondenspannungswerten US für fettes und mageres Gemisch liegt. In Fig. 2 ist angenommen, daß der Sonde gerade Abgas von fettem Gemisch zugeführt wird. Mit zunehmender Erwärmung der Sonde nimmt daher die Eingangsspannung UEON vom Lastspannungswert UO zu höheren Spannungswerten zu.

Wenn kein Nebenschluß besteht, stimmt die Eingangsspannung UEON bei eingeschalteter Sondenheizung mit der Eingangsspannung bei ausgeschalteter Sondenheizung überein. In Fig. 2 ist jedoch angenommen, daß ein Nebenschluß besteht. Die Spannung UEMN liegt dann höher als die Spannung UEON, und zwar um einen Differenzwert DAE beim ersten Einschalten der Heizung. In Fig. 2 ist dargestellt, daß sich die aufgrund von Nebenschluß erhöhte Spannung UEMN mit zunehmender Zeit nach dem Einschalten der Sondenheizung immer mehr der Spannung UEON nähert. Der Grund dafür ist der, daß davon ausgegangen ist, daß der Nebenschluß durch Wasser erzeugt ist, was in der Regel der Fall ist, und daß das Wasser mit zunehmender Betriebsdauer immer mehr verdampft wird. Außerdem nimmt der Innenwiderstand mit zunehmender Erwärmung der Sonde stark ab, was zur Folge hat, daß sich der hochohmige Nebenschluß nicht mehr stark im Meßergebnis auswirkt. Sobald der Nebenschluß oder zumindest sein Einfluß ganz beseitigt ist, stimmt die Spannung UEMN mit der Spannung UEON überein. Die Zeit, bis dies der Fall ist, kann einige Minuten bis einige wenige 10 Minuten betragen.

In Fig. 2 sind noch drei Schwellspannungen eingezeichnet, und zwar eine obere Schwellspannung UREF für fette Lambdawerte, eine untere Schwellspannung UREM für magere Lambdawerte und eine Referenzspannung UR. Überschreitet die Spannung UE die Spannung UREF oder unterschreitet sie die Spannung UREM, wird die Sonde als betriebsbereit erkannt und von Steuerung auf Regelung umgeschaltet. Im Regelungsfall erfolgt beim Über- und Unterschreiten von UR jeweils Umkehr der Regelrichtung.

Die Schwellspannungen UREF und UREM dienen demgemäß zum verzögerten Einschalten der Regelung nach dem Start einer Brennkraftmaschine. Wie oben erläutert, entspricht die Eingangsspannung erst dann im wesentlichen dar Sondenspannung, wenn der Innenwiderstandswert RI unter den Lastwiderstandswert RO gefallen ist. Erst dann sind die gemessenen Werte für eine Regelung brauchbar. Bis zu diesem Zeitpunkt können einige Minuten seit dem Einschalten der Brennkraftmaschine vergehen. Vom Einschalten der Maschine bis zum Zeitpunkt, zu dem die Eingangsspannung UEON bei fehlendem Nebenschluß die Schwellspannung UREF erreicht, vergeht die Zeit TEON. Ist jedoch wegen eines Nebenschlusses die Eingangsspannung UEMN höher als die Spannung UEON, erfolgt das Einschalten bereits früher, und Zwar zu dem in Fig. 2 mit TEMN bezeichneten Zeitpunkt. Zu diesem ist die Sonde aber noch nicht ausreichend betriebswarm, so daß unzuverlässige Regelungsergebnisse erzielt werden, wenn bereits zu diesem verfrühten Zeitpunkt Regelung zugelassen wird. Das Einschalten der Regelung ist in Fig. 2 dadurch erkennbar, daß eine kurze Zeitspanne nach den Zeitpunkten TEON bzw. TEMN ein Sprung der Eingangsspannung auftritt.

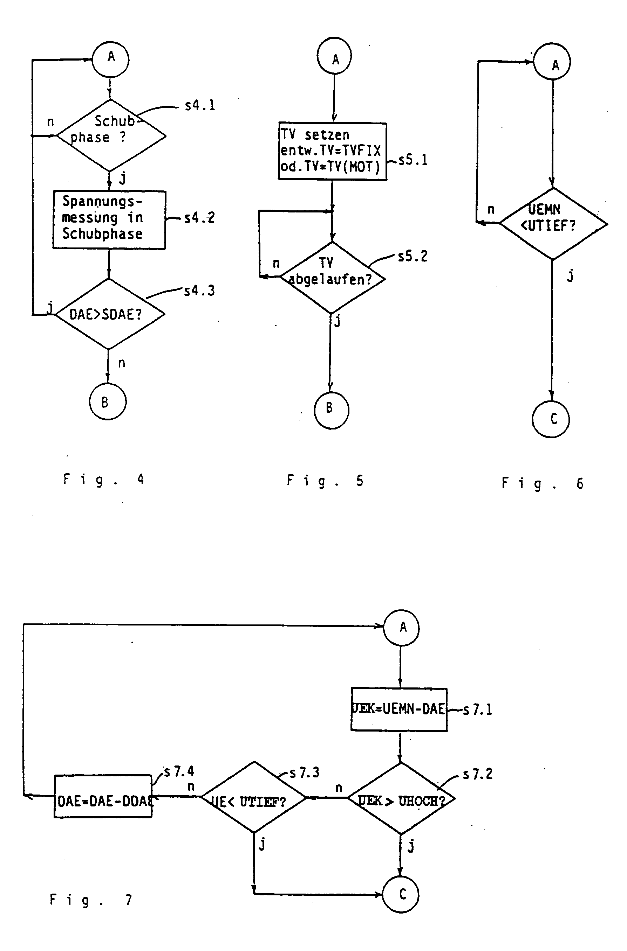

Ein Verfahren zum Erkennen von Nebenschluß wird nun anhand von Fig. 3 erläutert. Es setzt voraus, daß während der Schritte, die zur Erkennung dienen (Schritte s1 bis s5) der Motor steht. Nach dem Start des Verfahrens wird in einem Schritt s1 zunächst die Sondeneingangsspannung UEHA bei ausgeschalteter Heizung gemessen und der Spannungsmittelwert über 300 ms gebildet. In einem Schritt s2 wird die Heizung eingeschaltet und in einem Schritt s3 wird die Eingangsspannung UEHE bei eingeschalteter Heizung gemessen und gemittelt. In einem Schritt s4 wird die Differenz DAE zwischen den genannten beiden Spannungen bestimmt. In einem Schritt s5 wird überprüft, ob die Differenz DAE eine Schwelldifferenz SDAE überschreitet. Ist dies der Fall, entspricht dies dem Ausgeben eines Nebenschlußsignales, was durch einen Schritt s6 angedeutet ist. Die bejahende Antwort in Schritt s5, also das Nebenschlußsignal, bedeutet, daß die Sonde fehlerhaft ist, also der Lambdawert durch Steuerung eingeschaltet werden soll.

Auf den Schritt s6 folgt nach einer Marke A ein Schritt s7, in dem überprüft wird, ob noch Nebenschluß vorliegt. Ist dies der Fall, kehrt das Verfahren zur Marke A zurück. Ist dies dagegen nicht der Fall, wird über eine Marke B ein Schritt s8 erreicht, in dem eine übliche Bereitschaftsüberprüfung ausgeführt wird, beim Ausführungsbeispiel diejenige gemäß der eingangs genannten deutschen Schrift.

Dieser Schritt s8 wird über die Marke B auch ausgehend vom Schritt s5 erreicht, wenn dort festgestellt wird, daß kein Nebenschluß vorliegt.

Ergibt sich im folgenden Untersuchungsschritt s9, daß die Sonde noch nicht betriebsbereit ist, kehrt das Verfahren zur Marke B zurück. Ist die Sonde dagegen betriebsbereit, entspricht diese bejahende Antwort in Schritt s9 dem Ausgeben eines Regelbereitschaftssignales, was durch einen Schritt s10 angedeutet ist, der über eine Marke C erreicht wird. Mit Abgabe des Regelbereitschaftssignales endet das Verfahren.

Die Teilverfahren gemäß den Fig. 4 und 5 beschäftigen sich mit Details des Ablaufs zwischen den Marken A und B in Fig. 3.

Bei dem in Fig. 4 dargestellten Teilverfahren wird in Schubphasen überprüft, ob noch Nebenschluß vorliegt. Hierzu wird in einem Schritt s4.1 zunächst überprüft, ob Schubbetrieb vorliegt. Ist dies nicht der Fall, kehrt das Verfahren zur Marke A zurück. Herrscht dagegen Schubbetrieb, wird in einem Unterprogrammschritt s4.2 ein Ablauf ausgeführt, der den Verfahrensschritten s1 - s4 von Fig. 3 gleich ist. Es schließt sich ein Schritt s4.3 an, der mit Schritt s5 identisch ist, d. h. es wird untersucht, ob die Spannungsdifferenz DAE die Schwelldifferenz SDAE übersteigt. Ist dies der Fall, herrscht noch Nebenschluß, weswegen zur Marke A zurückgekehrt wird. Liegt dagegen kein Nebenschluß mehr vor, wird die Marke B erreicht.

Das Teilverfahren gemäß Fig. 5 nutzt die Beobachtung, daß Nebenschluß in aller Regel durch Wasser hervorgerufen wird, das bei Motorerwärmung verdunstet. Nach Ablauf einer gewissen Zeitspanne sollte also kein Nebenschluß mehr vorhanden sein.

Beim Teilablauf gemäß Fig. 5 wird in einem Schritt s5.1 nach der Markierung A die Verzögerungszeit TV für das Einschalten auf den Wert TV gesetzt. In einem Schritt s5.2 wird überprüft, ob die Meßzeit T bereits den Wert der Verzögerungszeit TV erreicht oder überschritten hat. Solange dies nicht der Fall ist, wird Schritt s5.4 immer wieder ausgeführt. Ist die Bedingung jedoch erfüllt, schließt sich der untere Verfahrensteil gemäß Fig. 3 ab der Markierung B an.

Die Verzögerungszeit TV kann ein fester Wert TVFIX sein. Dies hat den Vorteil eines einfachen Verfahrensablaufes. Jedoch besteht das Problem, daß unterschiedliche Bedingungen nicht berücksichtigt werden können. Es ist anzunehmen, daß die Verzögerungszeit um so größer sein sollte, je höher die Differenzspannung DAE ist, daß aber andererseits die Verzögerungszeit um so kürzer sein kann, je höher die aktuelle Motortemperatur TMOT ist. Letzteres, weil anzunehmen ist, daß in Zusammenhang mit höherer Motortemperatur die Umgebung der Sonde ebenfalls höhere Temperatur aufweist und damit Wasser, das den Nebenschluß verursacht, schneller verdampft.

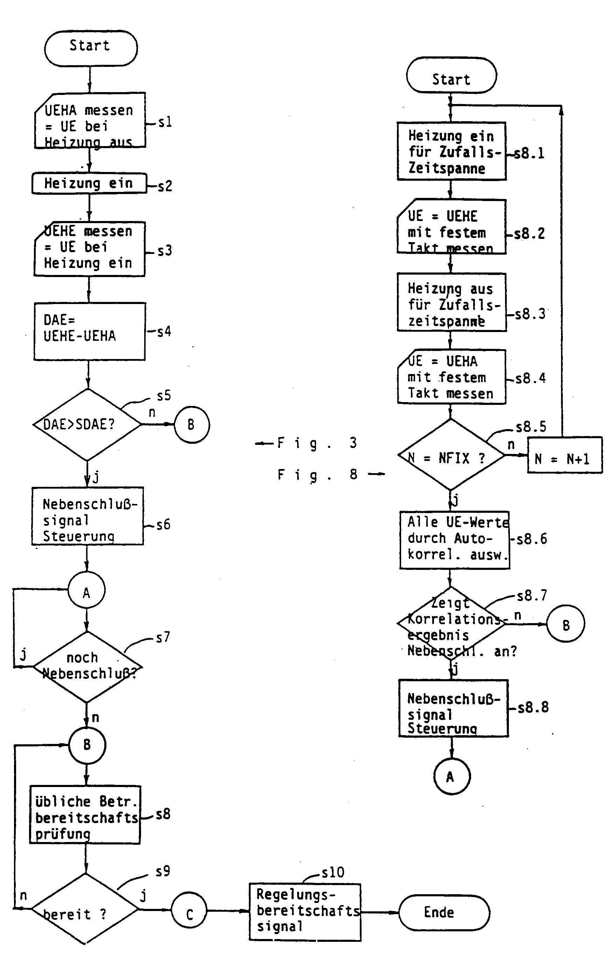

Die Teilverfahren gemäß den Fig. 6 und 7 ersetzen jeweils für sich das Teilverfahren von Fig. 3 zwischen den Marken A und C. Die Prüfung, ob noch Nebenschluß vorliegt, ist zugleich die Prüfung auf Regelbereitschaft.

Beim Teilverfahren gemäß Fig. 6 wird untersucht, ob die Sondeneingangsspannung UE bei eingeschalteter Heizung unter einen tiefen Schwellenwert UTIEF gefallen ist. Ist dies nicht der Fall, kehrt das Verfahren zur Marke A zurück, andernfalls wird die Marke C erreicht. Der tiefe Schwellenwert wird so festgelegt, daß er bei typischen Betriebsbedingungen nur unterschritten werden kann, wenn die Nebenschlußspannung nur noch gering ist. Zum Beispiel wird für eine vorgegebene Konfiguration von Brennkraftmaschine mit Lambdaregelung bestimmt, welches die tiefste Sondenspannung ohne Nebenschluß bei gerade betriebswarmer Sonde (etwa 300 °C) ist. Diese Spannung möge für eine bestimmte Anordnung 100 mV betragen. Zu dieser Spannung wird die tolerierbare Nebenschlußspannung addiert, z. B. 50 mV. Die addierte Spannung von 150 mV ist der tiefe Schwellenwert.

Das Teilverfahren gemäß Fig. 7 ermöglicht es, sowohl beim Erreichen eines unteren Schwellenwertes wie auch eines oberen Schwellenwertes die Funktion des Nebenschlußsignales aufzuheben und zugleich auf Regelbereitschaft zu erkennen. Hierzu wird die Spannungsdifferenz DAE von der Eingangsspannung UEMN in einem Schritt s7.1 abgezogen. In einem Schritt s7.2 wird überprüft, ob die so auf den richtigen Wert ohne Nebenschlußspannung kompensierte Spannung UEK eine obere Schwellenspannung UHOCH überschritten hat. Ist dies der Fall, wird die Marke C erreicht. Andernfalls geht das Verfahren zu einem Schritt s7.3 über, in dem überprüft wird, ob die unkompensierte Spannung UE unter eine untere Schwellenspannung UTIEF gefallen ist. Ist dies der Fall, geht das Verfahren zur Marke C über. Andernfalls wird in einem Schritt s7.4 der Differenzwert DAE um einen vorgegebenen kleinen Wert DDAE erniedrigt, woraufhin das Teilverfahren wieder ab der Marke A abläuft. Der abgezogene Wert DDAE muß nicht zeitlich konstant sein, sondern kann sich so ändern, daß die für typische Fälle bestimmte zeitliche Änderung der Nebenschluß(differenz)spannung möglichst genau nachgebildet wird.

Zur Verdeutlichung des Verfahrens nach Figur 7 dient die Figur 7*. Dort ist der Verlauf der Eingangsspannungen UEMN und UEON für mageres und fettes (siehe auch Figur 2) Luft-Kraftstoff-Gemisch bei Start der Brennkraftmaschine angegeben. Weiterhin ist der Verlauf der kompensierten Spannung UEK dargestellt.

Das in Figur 7 dargestellte Verfahren ersetzt den Teil des Verfahrens der Figur 3 zwischen den Markierungen A und C. Das heißt, das Verfahren der Figur 7 wird nur angewendet, wenn ein Nebenschlußsignal vorliegt und damit ist die Spannung UE durch eine Nebenschlußspannung derart verfälscht, daß sie höhere Werte annimmt (UEMN).

Wie aus Figur 7* ersichtlich, überschreitet eine derart verfälschte Spannung im Fall fetten Luft-Kraftstoff-Gemisches bei Start der Brennkraftmaschine verfrüht die obere Schwellspannung UHOCH und damit würde verfrüht auf Regelungsbereitschaft geschlossen. Um dieses zu verhindern, wird für die Abfrage auf Regelungsbereitschaft die kompensierte Spannung UEK, die in Schritt s7.1 berechnet wird, mit UHOCH verglichen (s7.2).

Die Differenz DAE, die zur Berechnung von UEK dient, muß dabei nicht zeitlich konstant sein, was in Figur 7 durch Schritt s7.4 beschrieben wird und in Figur 7* durch DAE (t) angegeben ist.

DAE(t) stellt zur Zeit t = 0 die Differenz zwischen UEMN und UEON dar. Das ist aus Figur 2 ersichtlich und folgt aus Schritt s4 der Figur 3 insofern, als daß bei ausgeschalteter Heizung UEON = UEHA und bei vorhandenem Nebenschluß und eingeschalteter Heizung UEMN = UEHE ist.

Im weiteren Verlauf (t = 0) ist diese Differenz jedoch nicht bekannt und DAE(t) gibt diese nur angenähert wieder. DAE(t) wird derart bestimmt, daß UEK nicht zu früh, d. h. vor der Spannung UEON, den Schwellwert UHOCH überschreitet. D. h. DAE(t) ist damit üblicherweise größer als die wahre Differenz zwischen UEMN und UEON für t = 0, was weiterhin bedeutet, daß UEK unterhalb von UEON verläuft.

Liegt beim Start der Brennkraftmaschine ein mageres Luft-Kraftstoff-Gemisch vor, so ist der Vergleich von UE mit UTIEF wesentlich für die Abfrage auf Regelungsbereitschaft.

Da, wie bereits dargestellt, für t = 0 der wert DAE(t) üblicherweise größer ist als die wahre Differenz zwischen UEMN und UEON, würde die kompensierte Spannung UEK = UEMN-DAE(t) unterhalb der Spannung UEON verlaufen. D.h. andererseits, daß in diesem Fall die untere Schwellspannung UTIEF zu früh erreicht und damit zu früh auf Regelungsbereitschaft geschlossen würde.

Deshalb dient zur Abfrage in Schritt s7.3 die unkompensierte Spannung UE.

Es sei noch daraufhingewiesen, daß die Formulierung in Figur 7* "Regelung ein" gleichbedeutend ist mit der aus Schritt s7 der Figur 3, in dem ein Regelungsbereitschaftssignal gebildet wird.

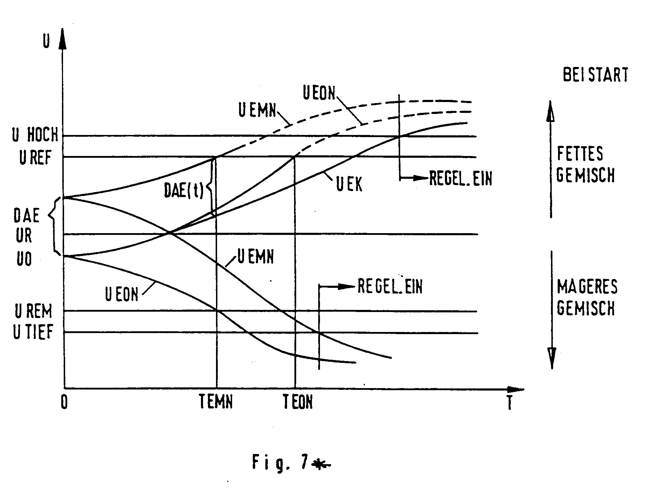

Das Teilverfahren gemäß Fig. 8 ersetzt denjenigen Teil des Verfahrens gemäß Fig. 3, das zwischen dem Start und der Marke A abläuft, also das Teilverfahren zum Erkennen von Nebenschluß und zum Ausgeben des Nebenschlußsignals. Es handelt sich um ein Verfahren, das auch dann ausführbar ist, wenn sich der Lambdawert zeitlich stark ändert, so daß mit lediglich zwei aufeinanderfolgenden Meßwerten, die mit und ohne Heizung erfaßt worden sind, nicht entschieden werden kann, ob eine gemessene Änderung durch eine Lambdawertänderung oder durch einen Nebenschluß verursacht ist.

In einem Schritt s8.1 wird die Heizung für eine Zufallszeitspanne eingeschaltet. In einem Schritt s8.2 wird während der gesamten genannten Zeitspanne die Sondenspannung UE = UEHE bei eingeschalteter Heizung gemessen. In einem Schritt s8.3 wird die Heizung für eine Zufallszeitspanne ausgeschaltet.

Während dieser Zeitspanne wird mit weiterhin festem Takt die Sondenspannung UE gemessen, die nun aber die jeweilige Spannung UEHA bei ausgeschalteter Heizung ist. In einem Schritt s8.5 wird überprüft, ob die Anzahl N, die angibt, wie oft die Schritte s8.1 - s8.4 durchlaufen worden sind, bereits eine vorgegebene Anzahl NFIX erreicht hat. Wurde die Zahl NFIX noch nicht erreicht, wird N um den Wert Eins erhöht und die Schritte s8.1 - s8.4 werden erneut durchgeführt. Der Zweck dieses Ablaufes ist es, genügend Meßwerte für ein Autokorrelationsverfahren zu erhalten, das in einem Schritt s8.6 dann ausgeführt wird, wenn die Anzahl N die vorgegebene Zahl NFIX erreicht. In einem Schritt s8.7 wird überprüft, ob das Ergebnis des Autokorrelationsverfahrens gemäß Schritt s8.6 das Vorhandensein einer Nebenschlußspannung anzeigt. Ist dies nicht der Fall, wird die Marke B des Ablaufs gemäß Fig. 3 erreicht. Ist dies dagegen der Fall, wird in einem Schritt s8.8 ein Nebenschlußsignal ausgegeben, und es wird auf Steuerung des Lambdawertes geschaltet.

Wird ein sehr rechenaufwendiges Autokorrelationsverfahren verwendet, ist es möglich, nicht nur festzustellen, ob eine Nebenschlußspannung vorhanden ist oder nicht, sondern es läßt sich auch deren Ausmaß bestimmen. Liegt die Größe der Nebenschlußspannung fest, wird diese von der gemessenen Sondenspannung abgezogen, um so den eigentlich richtigen Sondenspannungswert bereitzustellen. Es ist dann nicht erforderlich, auf Steuerung zu schalten, sondern es kann mit Hilfe des richtig ermittelten Sondenspannungswertes geregelt werden.

**Patentansprüche**

1. Verfahren zum Erkennen eines Fehlerzustandes einer durch eine Sondenheizung beheizbaren Lambdasonde und zum Ergreifen von Maßnahmen auf ein Fehlersignal hin, das bei erkanntem Fehlerzustand ausgegeben wird, wobei

   - die Sondenspannung bei ausgeschalteter Heizung gemessen wird,
   - die Heizung eingeschaltet wird,
   - die Sondenspannung bei eingeschalteter Heizung gemessen wird, und
   - dann, wenn die Meßwerte anzeigen, daß, bezogen auf jeweils gleiche Lambdawerte, die Spannung bei eingeschalteter Heizung größer ist als bei ausgeschalteter, das Fehlersignal, ggf. als Nebenschlußsignal, ausgegeben wird und das Fehlersignal oder das Fehlersignal und die Sondenspannung weiter verarbeitet werden.

2. Verfahren nach Anspruch 1, **dadurch gekennzeichnet,** daß

   - es durchgeführt wird, solange sich der Lambdawert nicht ändert, z. B. vor dem Start einer Brennkraftmaschine oder in Schubphasen,
   - die Differenz zwischen den Meßwerten gebildet wird, und
   - dann, wenn die Differenz einen vorgegebenen Schwellendifferenzwert übersteigt, das Fehlersignal ausgegeben wird.

3. Verfahren nach Anspruch 1, **dadurch gekennzeichnet,** daß

   - es bei sich ändernden Lambdawerten mit pseudobinärer Ein/Ausschaltfolge der Heizung ausgeführt wird,
   - die Sondenspannung mit fester Taktfolge gemessen wird,
   - die Meßwerte durch ein Autokorrelationsverfahren ausgewertet werden, und
   - dann, wenn die Auswertung anzeigt, daß den bei eingeschalteter Heizung gemessenen Spannungswerten eine vom jeweiligen Lambdawert unabhängige Nebenschlußspannung unzulässiger Größe überlagert ist, das Fehlersignal ausgegeben wird.

4. Verfahren nach einem der Ansprüche 1 - 3, **dadurch gekennzeichnet,** daß während des Vorliegens des Fehlersignales der Lambdawert durch Steuerung eingestellt wird.

5. Verfahren nach einem der Ansprüche 1 - 4, **dadurch gekennzeichnet,** daß nach Ablauf einer vorgegebenen Zeitspanne nach dem Auftreten des Fehlersignales dessen Wirkung aufgehoben wird.

6. Verfahren nach Anspruch 5, **dadurch gekennzeichnet,** daß die Zeitspanne von der Motortemperatur zum Zeitpunkt des Auftretens des Fehlersignales abhängt.

7. Verfahren nach einem der Ansprüche 1 - 6, **dadurch gekennzeichnet,** daß die Wirkung des Fehlersignales dann aufgehoben wird, wenn die Sondenspannung bei eingeschalteter Heizung einen vorgegebenen tiefen Schwellenwert unterschreitet.

8. Verfahren nach einem der Ansprüche 1 bis 7, dadurch gekennzeichnet, daß auf das Fehlersignal hin eine Kompensationsspannung mit beispielsweise über der Zeit abnehmenden Betrag von der Sondenspannung bei eingeschalteter Heizung abgezogen wird, welche Kompensationsspannung zunächst den Wert der Nebenschlußspannung aufweist, und die Wirkung des Fehlersignales aufgehoben wird, sobald die kompensierte Sondenspannung einen oberen Schwellwert überschreitet oder die unkompensierte Spannung einen unteren Schwellenwert überschreitet.

9. Verfahren nach Anspruch 3, dadurch gekennzeichnet, daß, solange das Fehlersignal ausgegeben wird, auf Grundlage einer korrigierten Sondenspannung geregelt wird, die aus der gemessenen Sondenspannung durch Abziehen der aus einem Autokorrelationsverfahren gewonnenen Nebenschlußspannung gebildet wird.

10. Vorrichtung zum Durchführen eines Verfahrens zum Erkennen eines Fehlerzustandes einer durch eine Sondenheizung beheizbaren Lambdasonde und zum Ergreifen von Maßnahmen auf ein Fehlersignal hin, das bei erkanntem Fehlerzustand abgegeben wird, wobei ein Mittel (23) vorgesehen ist zum Feststellen, ob die Spannung bei eingeschalteter Heizung größer ist als bei ausgeschalteter, jeweils bezogen auf gleichen Lambdawert, und zum Ausgeben des Fehlersignales, falls dies der Fall ist, und zum Weiter verarbeiten des Fehlersignals oder des Fehlersignals und der Sondenspannung.

**Claims**

1. Method for detecting an error condition of a lambda probe which can be heated by a probe heater, and for taking measures on the basis of an error signal which is transmitted given a detected error condition, it being the case that

   - the probe voltage is measured with the heater switched off,
   - the heater is switched on,
   - the probe voltage is measured with the heater switched on, and
   - whenever the measured values indicate that, with reference to equal lambda values in each case, the voltage is higher with the heater switched on than with it switched off, the error signal, possibly as a shunt signal, is transmitted and the error signal or the error signal and the probe voltage are further processed.

2. Method according to Claim 1, characterized in that

- it is carried out as long as the lambda value does not vary, for example before the start of an internal combustion engine or in overrunning phases,
- the difference between the measured values is formed, and
- the error signal is transmitted whenever the difference overshoots a prescribed threshold difference value.

3. Method according to Claim 1, characterized in that
   - it is carried out in the case of varying lambda values with the aid of a pseudo-binary sequence of switching the heater on/off,
   - the probe voltage is measured at a fixed clock pulse rate,
   - the measured values are evaluated by an autocorrelation method, and
   - the error signal is transmitted whenever the evaluation indicates that a shunt voltage of impermissible magnitude and independent of the respective lambda value is superimposed on the voltage values measured with the heater switched on.

4. Method according to one of Claims 1 - 3, characterized in that during the presence of the error signal the lambda value is set by means of open-loop control.

5. Method according to one of Claims 1 - 4, characterized in that after the expiry of a prescribed time interval after the occurrence of the error signal the effect thereof is cancelled.

6. Method according to Claim 5, characterized in that the time interval depends on the engine temperature from the instant of the occurrence of the error signal.

7. Method according to one of Claims 1 - 6, characterized in that the effect of the error signal is cancelled whenever the probe voltage undershoots a prescribed low threshold value with the heater switched on.

8. Method according to one of Claims 1 to 7, characterized in that on the basis of the error signal a compensation voltage of an amount which, for example, decreases over time is subtracted from the probe voltage with the heater switched on, which compensation voltage firstly has the value of the shunt voltage, and the effect of the error signal is cancelled as soon as the compensated probe voltage overshoots an upper threshold value or the uncompensated voltage overshoots a lower threshold value.

9. Method according to Claim 3, characterized in that as long as the error signal is transmitted closed-loop control is carried out on the basis of a corrected probe voltage which is formed from the measured probe voltage by subtracting the shunt voltage obtained from an autocorrelation method.

10. Device for carrying out a method for detecting an error condition of a lambda probe which can be heated by a probe heater and for taking measures on the basis of an error signal which is transmitted given a detected error condition, means (23) being provided to determine whether the voltage is higher with the heater switched on than with it switched off, referred in each case to the same lambda value, and for transmitting the error signal if this is the case, and for further processing the error signal or the error signal and the probe voltage.

**Revendications**

1. Procédé de détection d'un état de défaut (défectuosité) d'une sonde lambda susceptible d'être chauffée par un chauffage de sonde et pour prendre des mesures à partir d'un signal de défaut qui est émis lorsque l'état de défaut est reconnu, procédé selon lequel :
   - on mesure la tension de la sonde, le chauffage étant coupé,
   - on branche le chauffage,
   - on mesure la tension de la sonde, le chauffage étant branché et
   - lorsque les valeurs de mesure indiquent que rapportée à la même valeur lambda, la tension pour le chauffage branché est supérieure à celle lorsque le chauffage est coupé, on émet un signal de défaut (le cas échéant comme signal de court-circuit) et on poursuit le traitement du signal de défaut ou du signal de défaut et de la tension de la sonde.

2. Procédé selon la revendication 1, caractérisé en ce que :
   - on exécute aussi longtemps que la valeur lambda ne change pas, par exemple avant le démarrage d'un moteur thermique ou en phase de poussée,
   - on forme la différence entre les valeurs de mesure et
   - lorsque la différence dépasse un seuil de différence, on émet le signal de défaut.

3. Procédé selon la revendication 1, caractérisé en ce que :
- lorsque la valeur lambda ne change pas on passe au chauffage avec une suite marche/arrêt pseudo binaire,
- on mesure la tension de la sonde suivant une cadence fixe,
- on exploite les valeurs de mesure par un procédé d'auto-corrélation et
- lorsque l'exploitation indique aux tensions mesurées, le chauffage étant branché, est ajoutée une tension de court-circuit d'importance inacceptable, indépendante de la valeur lambda, on émet un signal d'erreur.

4. Procédé selon l'une des revendications 1 à 3, caractérisé en ce que pendant la présence du signal de défaut on règle la valeur lambda par commande.

5. Procédé selon l'une des revendications 1-4, caractérisé en ce qu'après un temps prédéterminé à la suite de l'arrivée du signal de défaut on supprime son action.

6. Procédé selon la revendication 5, caractérisé en ce que l'intervalle de temps dépend de la température du moteur jusqu'à l'instant de l'arrivée du signal de défaut.

7. Procédé selon l'une des revendications 1-6, caractérisé en ce qu'on supprime l'action du signal de défaut lorsque la tension de la sonde passe en-dessous d'un seuil bas, prédéterminé, le chauffage étant branché.

8. Procédé selon l'une des revendications 1 à 7, caractérisé en ce qu'à la suite du signal de défaut on retranche de la tension de sonde, le chauffage étant branché, une tension de compensation dont l'amplitude diminue par exemple en fonction du temps, cette tension de compensation ayant tout d'abord la valeur de la tension de court-circuit et on supprime l'action du signal de défaut dès que la tension de sonde, compensée, dépasse un seuil supérieur ou que la tension non compensée passe au-dessus d'un feuil inférieur.

9. Procédé selon la revendication 3, caractérisé en ce qu'aussi longtemps que le signal de défaut est émis, on régule sur la base d'une tension de sonde corrigée formée en retranchant à la tension de sonde mesurée, la tension de court-circuit obtenue par un procédé d'auto-corrélation.

10. Dispositif pour la mise en oeuvre d'un procédé de détection d'un état de défaut (défectuosité) d'une sonde lambda susceptible d'être chauffée par un chauffage de sonde et pour prendre des mesures à partir d'un signal de défaut émis lorsque l'état de défaut est décelé, dispositif dans lequel il est prévu un moyen (23) pour constater que la tension est supérieure lorsque le chauffage est branché que lorsqu'il est coupé, par rapport à la même valeur lambda et pour émettre le signal de défaut dans l'affirmative, et de continuer le traitement du signal de défaut ou du signal de défaut et de la tension de la sonde.

Fig.1

Fig.2

Fig. 4

Fig. 5

Fig. 6

Fig. 7

Fig. 3

Fig. 8

Fig. 7